# EUROPEAN PATENT APPLICATION

(11) **EP 0 808 037 A2**
(43) Date of publication of application: **19.11.1997**
(21) Application number: 97303311.1
(22) Date of filing: 15.05.1997
(51) Int. Cl.: H04B 7/185

(54) **Communications apparatus and method**

(30) Priority: 17.05.1996 GB 9610389
(71) Applicant: ICO Services Ltd., London W6 9BN (GB)
(72) Inventor: Young, Eddy Ka Ping, Kingston Upon Thames, Surrey, KT2 5GQ (GB)
(74) Representative: Read, Matthew Charles

(57) **Abstract**

A ground network for use in a satellite voice communications system, said system comprising at least one orbiting satellite (4), at least one earth station (6) in communication therewith, and a plurality of user voice terminals (2) in communication with the earth station (6) via a transmission path including the at least one satellite (4), each said user voice terminal including a voice codec (30) generating a digital speech signal carried over said transmission path at a first bit rate, said network comprising a plurality of nodes (6) connected with said earth station (6) and mutually interconnected by terrestrial speech channels each of which is arranged to carry a speech signal at a second bit rate, said second bit rate substantially exceeding said first, in which said network comprises a plurality of multiplexers (506) each of which is connected to receive from said earth station (6) a plurality of said digital speech signals and to multiplex them onto a lesser number of said speech channels.

## Description

### FIELD OF THE INVENTION

This invention relates to communications with a mobile user, and in particular to such communications in which the link to the mobile user is via a satellite or satellites.

### BACKGROUND ART

US 4189675 proposes a satellite communications method and apparatus for communicating with mobile users using a network of satellite in predetermined orbits. It would be possible to provide a complete communications network using only satellites, by utilising satellite-to-satellite links. However, both power and bandwidth are at a premium in satellite communications, and the capacity of such a network would therefore be small. It has therefore been proposed to employ ground components to form part of the link between one user and another.

EP 0562374 and EP 0568778 are believed to describe the "Iridium" proposed satellite cellular mobile communication system.

An alternative description of the "Iridium" proposals is given in the paper "The Iridium (TM) system personal communications anytime, any place" J.E. Hatlelid and L. Casey, Proceedings of the Third International Mobile Satellite Conference IMC 93, 16-18 June 1993, pages 285-290.

An alternative proposed satellite cellular system is described in "The Globalstar Mobile Satellite System for Worldwide Personal Communications", R.A. Weideman, pages 291-296 of the Conference Proceedings mentioned above. Two alternative access network schemes, invented by the author of that paper, and believed to have been proposed for use in the proposed Globalstar system, are described in EP 0536921 and EP 0506255.

British application GB-A-2295296 and International application WO 96/16488 respectively describe a satellite communications network and in particular the ground segment thereof. In the system suggested therein, communications over the radio frequency satellite link take place in low bit rate encoded format. In one embodiment therein, communications over terrestrial part of the network are not in low bit rate format, but in another embodiment it is suggested that the low bit rate codecs could be positioned at gateways into the system so that all traffic over the ground segment is likewise low bit rate encoded.

Various terrestrial digital cellular communications systems are known or proposed. Of these, the GSM is widely known. In the GSM system, speech is likewise carried over the air interface in low bit rate encoded form. However, higher bit rates are used within the terrestrial network comprised within the system.

The document "Options for the implementation of network infrastructure"; G. Mazziotto, DCRC conference proceedings 12-14 October 1988 (Digital Cellular Radio Conference), Hagen, Westphalia, Federal Republic of Germany, published by Deutche Bundespost, France Telecom and Fern Universitate, describes various possibilities for implementing the architecture of the GSM system. It is not known which if any of these possibilities have ever been used. Specifically, it is suggest that in addition to the possibility of positioning the low bit rate transcoder at the base transceiver station (BTS) it could alternatively be positioned at the base station centre (BSC) of the mobile switching centre (MSC).

The present invention is intended to provide a satellite communications system in which efficient use is made of the bandwidth of the terrestrial segment of the system, and/or the system is able to operate using commercially available components.

According to the invention there is provided a ground network for use in a satellite voice communications system, said system comprising at least one orbiting satellite, at least one earth station in communication therewith, and a plurality of user voice terminals in communication with the earth station via a transmission path including the at least one satellite, each said user voice terminal including a voice codec generating a digital speech signal carried over said transmission path at a first bit rate, said network comprising a plurality of nodes connected with said earth station and mutually interconnected by terrestrial speech channels each of which is arranged to carry a speech signal at a second bit rate, said second bit rate substantially exceeding said first, in which said network comprises a plurality of multiplexers each of which is connected to receive from said earth station a plurality of said digital speech signals and to multiplex them onto a lesser number of said speech channels.

Where error protection encoding is supplied over the air interface, this may be stripped off prior to transmission of the voice signal over the terrestrial network, thus reducing the bit rate significantly.

Where the bit rate is significantly lower than a convenient sub multiple of the terrestrial speech channel rate, the remaining channel capacity may conveniently be utilised to carry an associated data channel.

Conveniently, conventional (64 kilobit per second) switches may be used; in this case, advantageously each switch is associated with multiplexer and demultiplexer components for separating the low bit rate speech signals from a single channel prior to switching and recombining the signals after switching; and rate converters for increasing the rate of the low bit rate speech signals prior to switching and decreasing the signal rates subsequent to switching.

Where the ground network is connected to other networks (e.g. a PSTN or a terrestrial cellular network (PLMN)), the transcoder for converting between the low bit rate speech signal and the speech signal format used in the other networks may either be provided at the gateway station (e.g. international switching centre) connecting into the other network, or at a node of the ground network. The former embodiment has the advantage of enabling greater capacity on the links between the gateway station and the ground network, whereas the latter has the advantage of enabling the use of unmodified gateway stations.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a communications system embodying the present invention;
Figure 2 is a block diagram showing schematically the elements of mobile terminal equipment suitable for use with the present invention;
Figure 3 is a block diagram showing schematically the elements of an Earth station node forming part of the embodiment of Figure 1;
Figure 4 is a block diagram showing schematically the elements of a gateway station forming part of the embodiment of Figure 1;
Figure 5 is a block diagram showing schematically the elements of a database station forming part of the embodiment of Figure 1;
Figure 6 illustrates the contents of a store forming part of the database station of Figure 5;
Figure 7a illustrates schematically the beams produced by a satellite in the embodiment of Figure 1;
Figure 7b illustrates schematically the disposition of satellites forming part of Figure 1 in orbits around the earth;
Figure 8 illustrates the geographical disposition of the components of Figure 1 on the Earth;
Figure 9 is a schematic diagram of a first embodiment of the invention illustrating the bit rates used at various points of the network;
Figure 10 is a block diagram comprising part of the earth station node of Figure 3;
Figure 11 is a block diagram showing the interconnection of an earth station of Figure 3 with other networks in the embodiment of Figure 9;
Figure 12 is a block diagram showing the interconnection of two earth stations in the embodiment of Figure 9;
Figure 13 is a schematic diagram showing a second embodiment alternative to that of Figure 9;
Figure 14 is a block diagram showing the interconnection of an earth station, a gateway and a further telecommunications network according to the embodiment of Figure 13; and
Figure 15 is a block diagram showing the interconnection of an earth station, a gateway and a further telecommunications network according to a third embodiment.

### PREFERRED EMBODIMENT

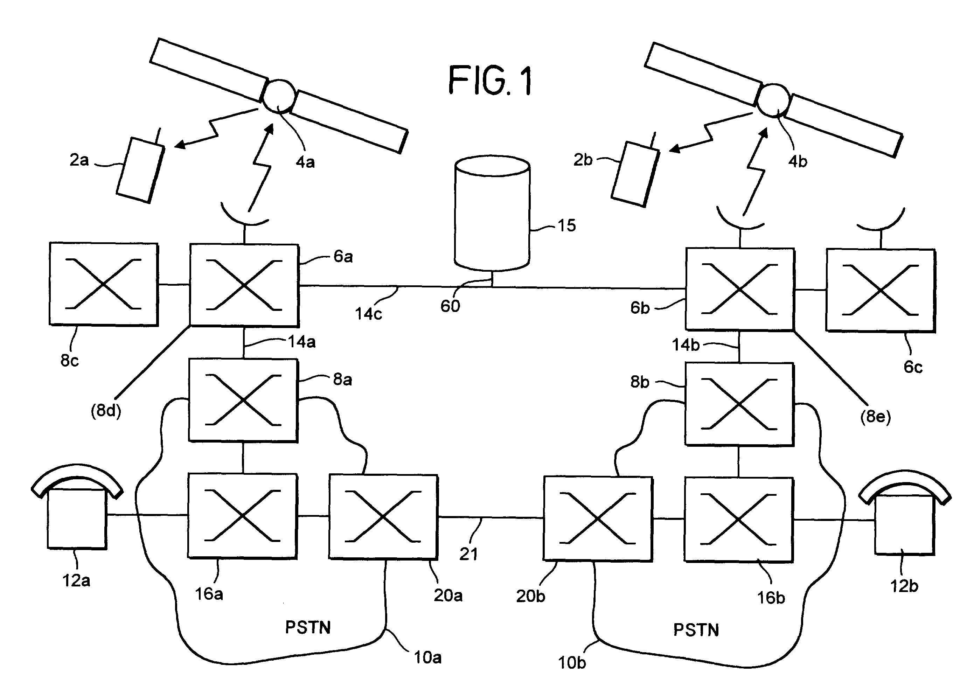

Referring to Figure 1, a satellite communications network according to this embodiment comprises mobile user terminal equipment 2a,2b; orbiting relay satellites 4a,4b; satellite earth station nodes 6a,6b; satellite system gateway stations 8a,8b; public switched telecommunications networks 10a,10b; and fixed telecommunications terminal equipment 12a,12b.

Interconnecting the satellite system gateways 8a,8b with the earth station nodes 6a,6b, and interconnecting the nodes 6a,6b with each other, is a dedicated ground-based network comprising channels 14a,14b,14c. The satellites 4, earth station nodes 6 and lines 14 make up the infrastructure of the satellite communications network, for communication with the mobile terminals 2, and accessible through the gateway stations 8.

A terminal location database station 15 is connected, via a signalling link 60 (e.g. within the channels 14 of the dedicated network) to the gateway station and earth stations 6.

The PSTNs 10a,10b comprise, typically, local exchanges 16a,16b to which the fixed terminal equipment 12a,12b is connected via local loops 18a,18b; and international switching centres 20a,20b connectable one to another via transnational links 21 (for example, satellite links or subsea optical fibre cable links). The PSTNs 10a,10b and fixed terminal equipment 12a,12b (e.g. telephone instruments) are well known and almost universally available today.

Each mobile terminal apparatus is in communication with a satellite 4 via a full duplex channel (in this embodiment) comprising a down link channel and an up link channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is hand over from one satellite 4 to another.

### Mobile terminal 2

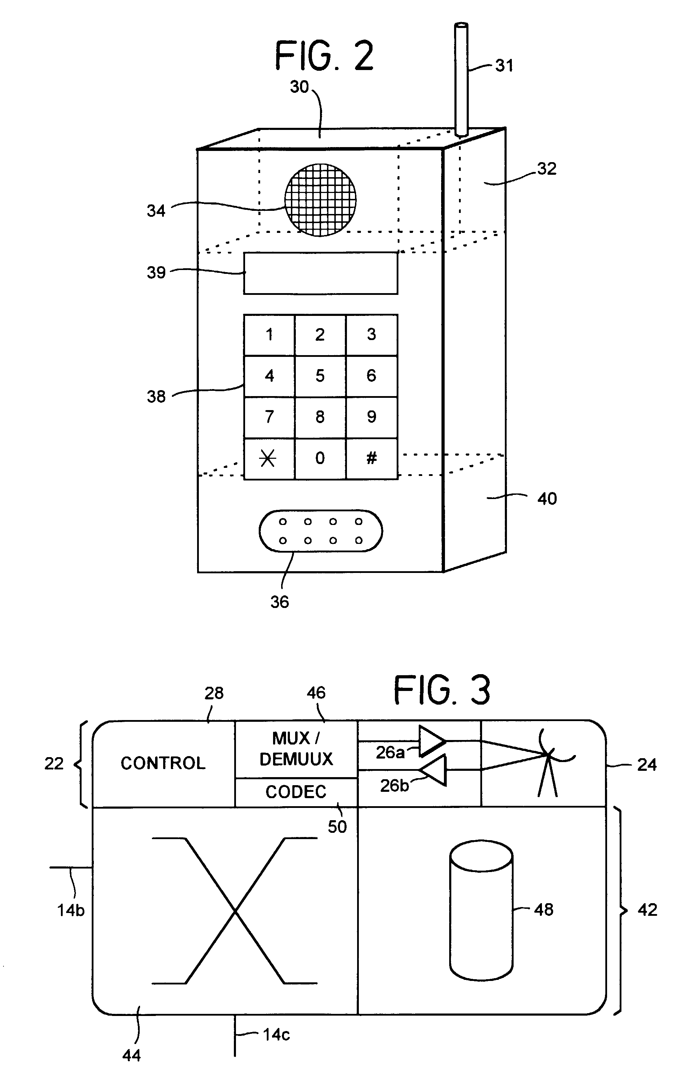

Referring to Figure 2, the mobile terminal equipment of Figure 1 is shown.

One suitable form is a handset, as shown. Details of the handsets 2a,2b etc do not form part of the present invention, but they may comprise handsets similar to those presently available for use with the GSM system, comprising a digital coder/decoder 30, together with conventional microphone 36, loudspeaker 34, battery 40 and keypad components 38, and a radio frequency (RF) interface 32 and antenna 31 suitable for satellite communications. Preferably a display 39 (for example a liquid crystal display) is also provided. A 'smart card' reader receiving a smart card storing user information may be present.

The coder/decoder (codec) 30 comprises a low bit rate coder, generating a speech bit stream at around 3.6 kilobits per second, together with a channel coder applying error correcting encoding, to generate an encoded bit stream at a rate of 4.8 kilobits per second. The low bit rate coder may, for example, be a linear predictive coder such as a multiple pulse predictive coder (MPLPC) a code book excited linear predictive coder (CELP), or a residual excited linear predictive coder (RELP). Alternatively, it may employ some form of waveform coding such as subband coding.

The error protection encoding applied may employ block codes, BCH codes, Reed-Solomon codes, turbo codes or convolutional codes. The codec 30 likewise comprises a corresponding channel decoder (e.g. using Viterbi or soft decision coding) and speech decoder.

### Earth Station Node 6

The earth station nodes 6 are arranged for communication with the satellites.

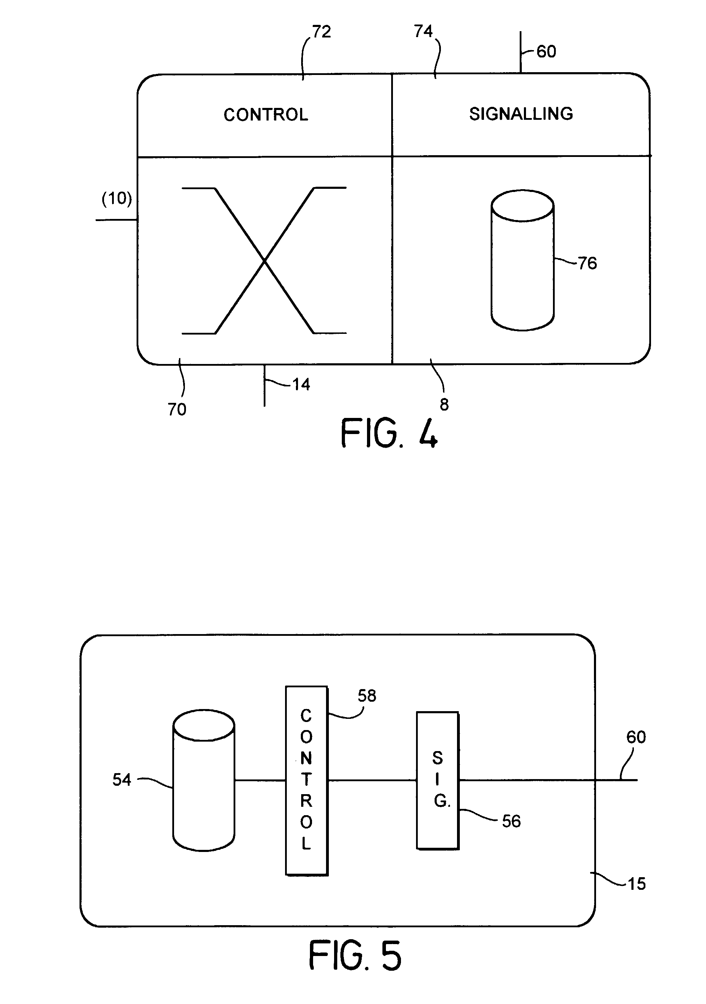

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemeris data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the nodes 6 is in communication.

### Gateway 8

Referring to Figure 4, the gateway stations 8a,8b comprise, in this embodiment, commercially available mobile switch centres (MSCs) of the type used in digital mobile cellular radio systems such as GSM systems. They could alternatively comprise a part of an international or other exchange forming one of the PSTNs 10a,10b operating under software control to interconnect the networks 10 with the satellite system trunk lines 14.

The gateway stations 8 comprise a switch 70 arranged to interconnect incoming PSTN lines from the PSTN 10 with dedicated service lines 14 connected to one or more Earth station nodes 6, under control of a control unit 72. The control unit 72 is capable of communicating with the data channel 60 connected to the database station 15 via a signalling unit 74, and is arranged to generate data messages in some suitable format (e.g. as packets or ATM cells).

Also provided in the gateway stations 8 is a store 76 storing billing, service and other information relating to those mobile terminals 2 for which the gateway station 8 is the home gateway station. Data is written to the store 76 by the control unit 72 after being received via the signalling unit 74 or switch 70, from the PSTN 10 or the Earth station nodes 6 making up the satellite network.

The satellite system trunk lines 14 comprise, in this embodiment, high quality leased lines meeting acceptable minimum criteria for signal degradation and delay. In this embodiment, all the lines 14 comprise terrestrial links. The trunk lines 14 are preferably dedicated lines, so that the lines 14 form a separate set of physical channels to the networks 10. However, the use of virtual circuits through the networks 10 is not excluded.

### Location Database Station 15

Referring to Figure 5 the global database station 15 comprises a digital data store 54, a signalling circuit 56, a processor 58 interconnected with the signalling circuit 56 and the store 54, and a signalling link 60 interconnecting the database station 15 with the gateway stations 8 and Earth stations 6 making up satellite system network, for signalling or data message communications.

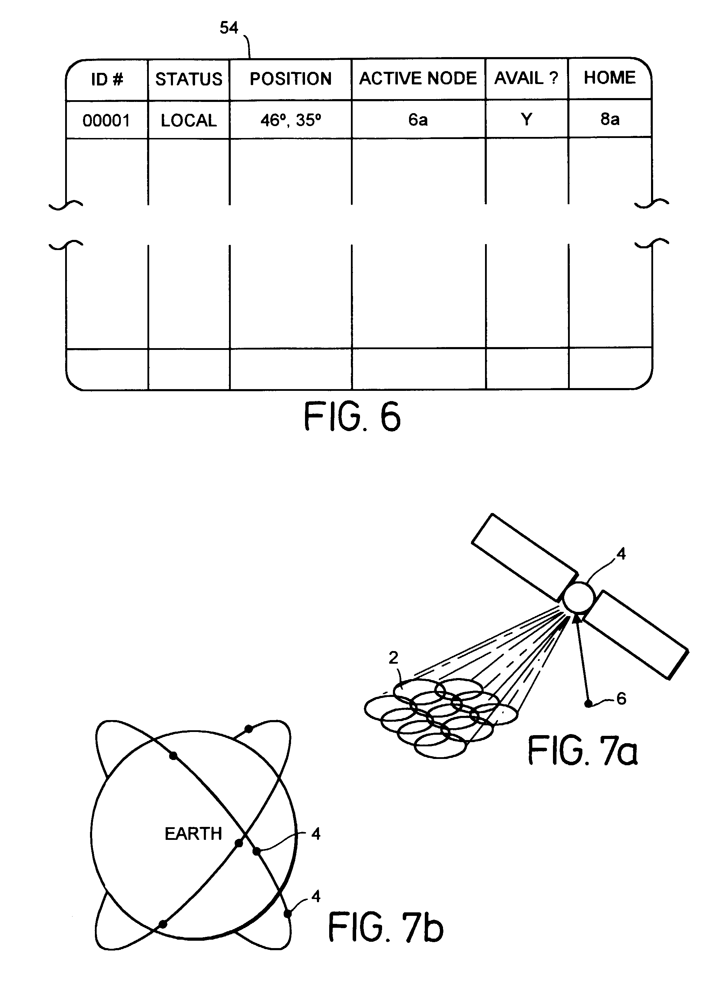

The store 54 contains, for every subscriber terminal apparatus 2, a record showing the current status of the terminal 2 (whether it is "local" or "global" as will be disclosed in greater detail below); the geographical position of the mobile terminal 2 (either in co-ordinate geometry, or as code identifying an area within which it lies); the "home" gateway station 8 with which the apparatus is registered (to enable billing and other data to be collected at a single point) and the currently active Earth station node 6 with which the apparatus 2 is in communication via the satellite 4. The contents of the store are indicated in Figure 6.

The signalling unit 56 and processor are arranged to receive interrogating data messages, via the signalling circuit 60 (which may be a packet switched connection), from gateways 8 or nodes 6, comprising data identifying one of the mobile terminals 2 (for example, the telephone number of the equipment 2), and the processor 58 is arranged to search the store 54 for the status and active earth station node 6 of the terminal 2 and to transmit these in a reply message via the data line 60.

### Satellites 4

The satellites 4a,4b comprise generally conventional communications satellites, and may be as disclosed in GB 2288913. Each satellite 4 is arranged to generate an array of beams covering a footprint beneath the satellite, each beam including a number of different frequency channels and time slots, as described in GB 2293725 and illustrated in Figure 7a.

The satellites 4a are arranged in a constellation in sufficient numbers and suitable orbits to cover a substantial area of the globe (preferably to give global coverage) for example 10 (or more) satellites may be provided in two (or more) mutually orthogonal intermediate circular orbits at an altitude of, for example, 10,500 kilometres as shown in Figure 7b. Equally, however, larger numbers of lower satellites may be used, as disclosed in EP 0365885, or other publications relating to the Iridium system, for example.

### Geographical arrangement

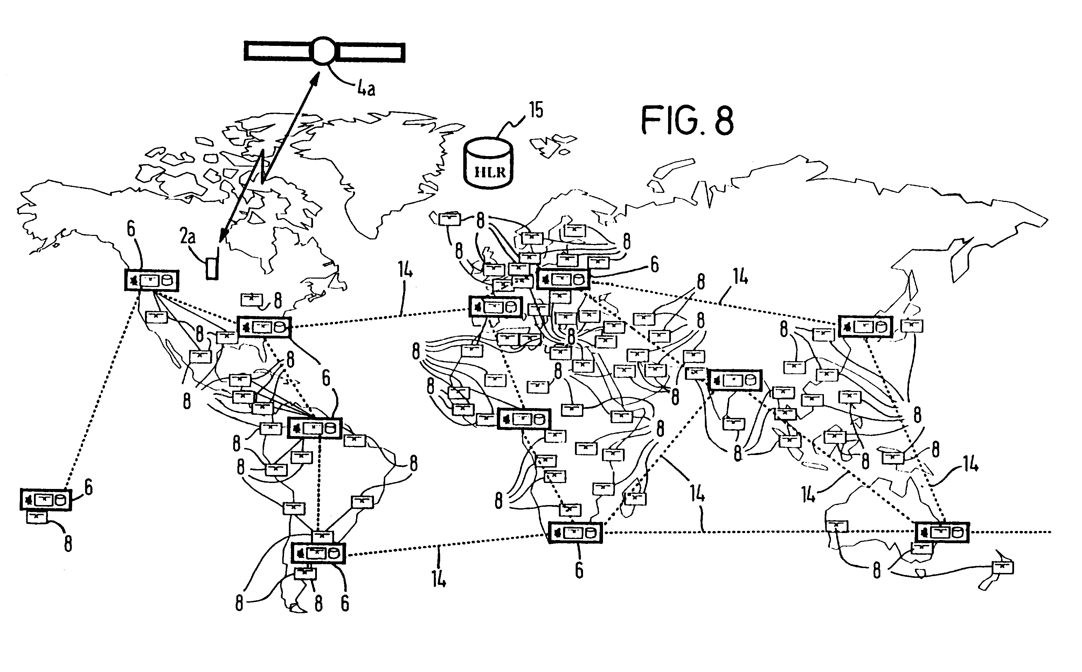

Referring to Figure 8, one exemplary geographical arrangement is shown (only one satellite 4a is shown for clarity). The database station 15 may be located anywhere, and the position indicated is purely notional; in practice, it is preferably located in the geographical area from which most calls originate, or within which the best signalling infrastructure exists. In Figures 8 onwards, a dotted line denotes a signalling link and a solid line denotes a communications traffic link.

With the number of satellites mentioned below, there may typically be 12 earth station nodes 6, two for each continent. In this manner, each earth station node 6 is connectable to gateways 8 on the continent, whilst having in view one or more satellites 4.

In this embodiment there are significantly larger number of gateways 8 than of earth station nodes 6; on the order of one per country (i.e. over a hundred in total). For larger countries, several gateways 8 may be provided at different geographical locations, or (where several network operators are permitted in the country) one per PSTN. Smaller countries may share gateways 8. Gateways 8 may also be provided from terrestrial cellular networks (although this is not explicitly indicated in Figure 8).

For ease of explanation PSTNs 10 are omitted from Figure 8 since their coverage is virtually global.

The operation of the above embodiment will now be described in greater detail.

### Registration and Location

In one embodiment, a customer mobile terminal apparatus 2 may be registered with one of two distinct statuses; "local" in which the mobile terminal apparatus is permitted only to communicate through one local area, or part of the satellite system network, and "global", which entitles the apparatus to communicate through any part of the satellite system network.

The status of each apparatus 2 (i.e. "local" or "global") is stored in the record held for the apparatus 2 concerned in the store 54 of the database station 15.

The mobile terminal apparatus 2 performs an automatic registration process, of the kind well known in the art of cellular terrestrial communications, on each occasion when the terminal 2 is utilised for an outgoing call; and/or when the apparatus 2 is switched on; and/or periodically whilst the apparatus 2 is switched on. As is conventional, the registration process takes the form of the broadcasting of a signal identifying the mobile terminal 2 (e.g. by transmitting its telephone number on a common hailing or signalling frequency).

The transmitted signal is picked up by one or more satellites 4. Under normal circumstances, the signal is picked up by multiple satellites 4, and the received signal strength and/or time of arrival are transmitted, together with the identity of the mobile apparatus 2 and of the satellite 4 receiving the signal, to the database station 15 via the earth stations node or nodes 6 for which the satellites 4 are in communications, and the signalling line 60.

The processor 58 of the database station 15 then calculates, e.g. on the basis of the differential arrival times, the terrestrial position of the mobile terminal apparatus 2, which is stored in the database 54. Also stored is the identity of the earth station node 6 most suitable for communicating with the mobile terminal apparatus 2 (the "active" station). This is typically found by the processor 58 comparing the stored position of the terminal 2 with the predetermined stored positions of each of the earth station nodes 6 and selecting the nearest. However, account may also or instead be taken of the strength of the signals received via the satellites 4, or of other factors (such as network congestion) to result, in borderline cases, in the choice of a node earth station which is not geographically closest to the mobile terminal equipment 2. The identity of the allocated active earth station node 6 is then likewise stored in the store 54 in the record for that terminal apparatus.

### CALL SET UP AND ROUTING

The processes of routing calls to and from mobile terminal apparatus 2 are described fully in GB-A-2295296 or WO 96/16488, both of which are hereby incorporated fully by reference. Briefly, for a local user outside its area, a call placed to the user or from the user is referred to the database station which determines that the user is outside of its area and thereafter does not process the call. For a local user which is inside its area, in the preferred embodiment described in the above referenced British and International application, calls to or from the user are set up over the satellite link, via the active earth station 6, the ground network, and the international public switch telephone network (PSTN) from the nearest gateway 8 to the terestrial user.

For global users, calls are routed via the satellite and the active earth station, then via the ground network to the gateway station 8 nearest to the terrestrial user.

The dial numbers allocated to mobile users may have "International" prefixes followed by a code corresponding to the satellite service network. Alternatively, they could have a national prefix followed by a regional code assigned to the satellite service.

Calls between one mobile user and another are carried out by directing the signal via a first satellite link down to the active earth station node of the first mobile user, via the ground network to the active earth station node of the second mobile user (which may be, but is not necessarily, the same as that of the first) and then via a second satellite link (which may, but does not need to be via the same satellite) to the second mobile user.

The store 54 acts somewhat in the manner of the Home Location Register (HLR) of a GSM terrestrial cellular system, and the store 48 in the manner of the Visiting Location Register (VLR) of GSM; commercially available HLR and/or VLR equipment may therefore be employed for these components, modified as necessary.

### FIRST EMBODIMENT

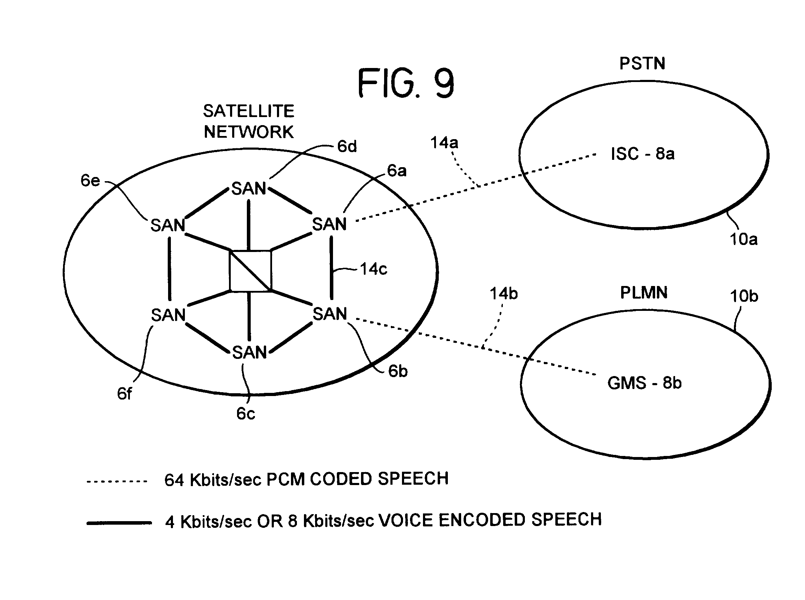

Referring to Figure 9, in this embodiment, the lines 14 all carry data in ISDN channels of 64 kilobits per second or multiples thereof (e.g. 2 Mbits per second). Each such multiple is referred to an a E0 channel. The lines 14 running between earth station nodes 6 (alternatively referred to as satellite access nodes or SANs) each convey a plurality of speech channels multiplexed into a 64 kilobit per second ISDN channel, whereas in this embodiment lines 14a, 14b running between a gateway node 8 and the earth station nodes 6 carry one speech channel in each 64 kilobit per second channel, in conventional 64 kilobit per second A-law pulse code modulated form.

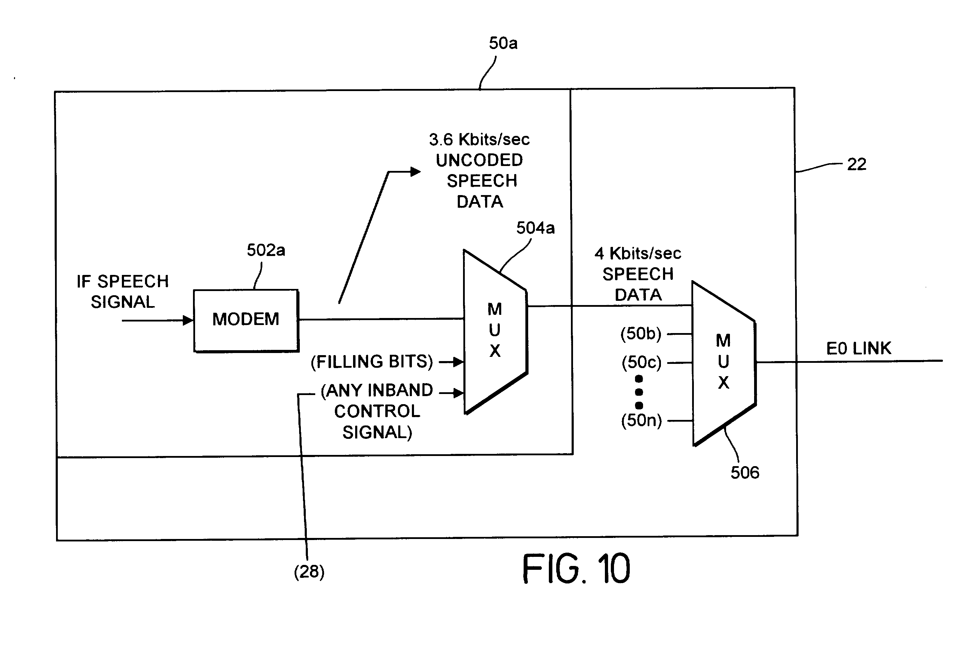

Referring to Figure 10, in this embodiment, codec 50 comprises a transcoder which receives the speech signal and delivers a re-coded version thereof.

Specifically, the codec 50 comprises a modem 502a receiving the speech signal from the multiplexer/ demultiplexer 46 and delivering a corresponding digital output bit stream. The speech signal (produced by the codec 30 of the user terminal 2) consists of original speech at a rate of about 3.6 kilobit/sec, which has been subjected to channel encoding to introduce redundancy so as to compensate the effects of fading or other channel distortions. When thus encoded, the bit rate of the received intermediate frequency speech signal is therefore around 4.8 kilobits per second. The codec 50 then decodes the channel encoding, to recover the low bit-rate speech signal.

The 3.6 kilobit per second speech signal (without channel encoding) is then supplied to a multiplexer 504a, which acts to increase the bit rate from 3.5 kilobits per second to 4 kilobits per second (since this is an even sub-multiple of 64 kilobits per second). This is achieved by buffering a portion of the uncoded speech signal, and then adding control data from the control unit 28 to provide an in-band control channel for the speech signal (for conveying, for example, handover information or location information).

If the rate of control data in the control data is lower than 0.4 kilobits per second, the multiplexer 504a may also append stuffing bits (e.g. zeros), or may reintroduce some light error protection (for example parity bits, check some bits or the repeating of key speech parameters, or a low gain convolutional coding) to increase the bit rate to 4 Kbit per second.

Thus, the output of the multiplexer 504a comprises the low bit rate speech signal, together with associated control data forming a control channel, and filler data, which is read out at a rate of 4 kilobit per second.

Also comprised within the codec 50 are the reverse components; in other words, a de-multiplexer 504b for separating out the control channel and stuffing data from the 3 kilobit per second speech data, and a modulator 502b for applying channel coding and modulation to generate intermediate frequency speech signal for application to the multiplexer 46; for clarity these components are omitted from Figure 10.

A plurality of codecs 50a, 50b...50m are provided; one for each output of the demultiplexer 46. The output of the multiplexer 504a is connected to one of 16 inputs of a block multiplexer 506; the other 15 inputs are connected to the 15 other codecs 50b, 50c... 50n. The 4 kilobit per second speech data from each of the codecs 50 is then time division multiplexed by the block multiplexer 506 onto a single 64 kilobit per second E0 channel leading to the (co-located) switch 44.

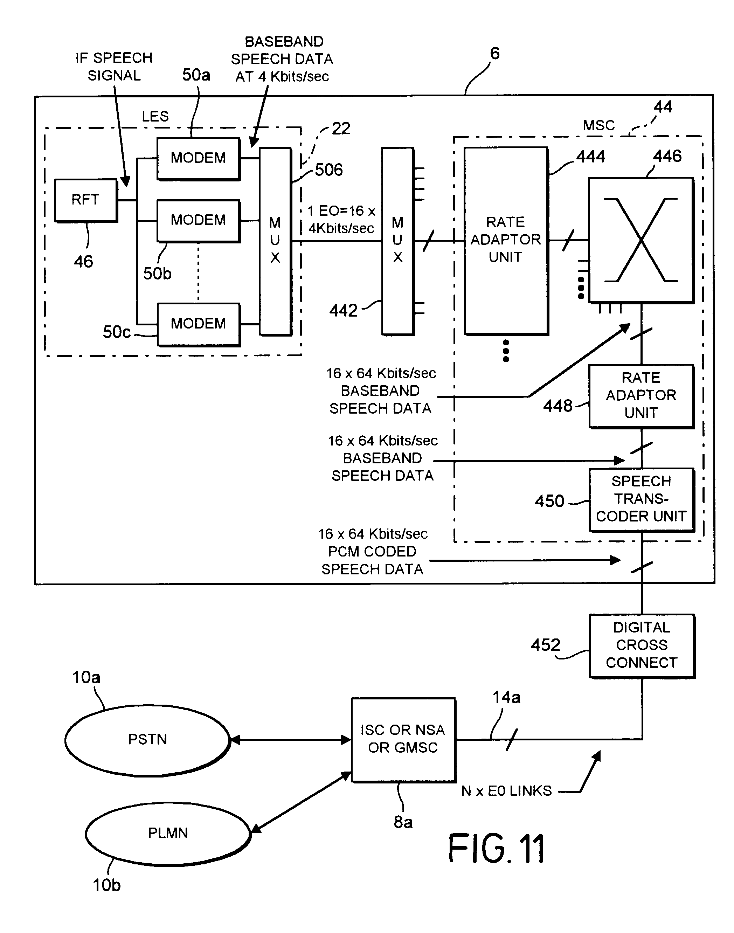

Referring to Figure 11, the 64 kilobit per second composite signal is demultiplexed by a demultiplexer 442 into 16 separate 4 kilobit per second speech channels, each of which is fed to a rate adaptor circuit 444 which generates a corresponding 64 kilobit per second output signal. The rate adapter circuit 444 may simply comprise an upsampler circuit arranged to oversample the 4 kilobit per second signal by a factor of 16, thus repeating each bit 16 times at the higher sample rate. It could alternatively comprise a stuffer circuit arranged to insert 16 zeros after each speech bit.

Thus, each of the 4 kilobit per second speech channels now runs at a rate of 64 kilobits per second and can therefore be switched by a standard ISDN switch 446. The 16 outputs of the 16 rate adapters 444a...444n connected to the demultiplexer 442 are therefore each coupled to a respective input port of the switch 446. The output ports of the switch 446 are each coupled to a adapter circuit 448 comprising a down sampler, arranged to sub sample the 64 kilobit per second signal back down to 4 kilobit per second.

The 4 kilobit per second output of some rate adapter units 448 are coupled to a speech transcoder device 450, comprising a low bit rate decoder arranged to transform the low bit rates speech signal into 64 kilobit per second A-law pulse code modulated (PCM) digital signal, which is then supplied, via one or more digital cross connect units 452 (e.g. switches) and lines 14c, to a gateway station 8a, connected to an external network (e.g. PSTN 10a or PLMN 10b).

For clarity, the above description relates to the signal path from the earth station node 6 to the public network 10, but since each speech channel is bidirectional, an exactly equivalent reverse path is provided, and thus the illustrated speech transcoder unit 450 comprises a low bit-rate to A-law coder, and an A-law to low bit-rate coder pair; each rate adapter unit 444, 448 comprises a down sampler and an up sampler; and each multiplexer 506, 442 comprises also a demultiplexer.

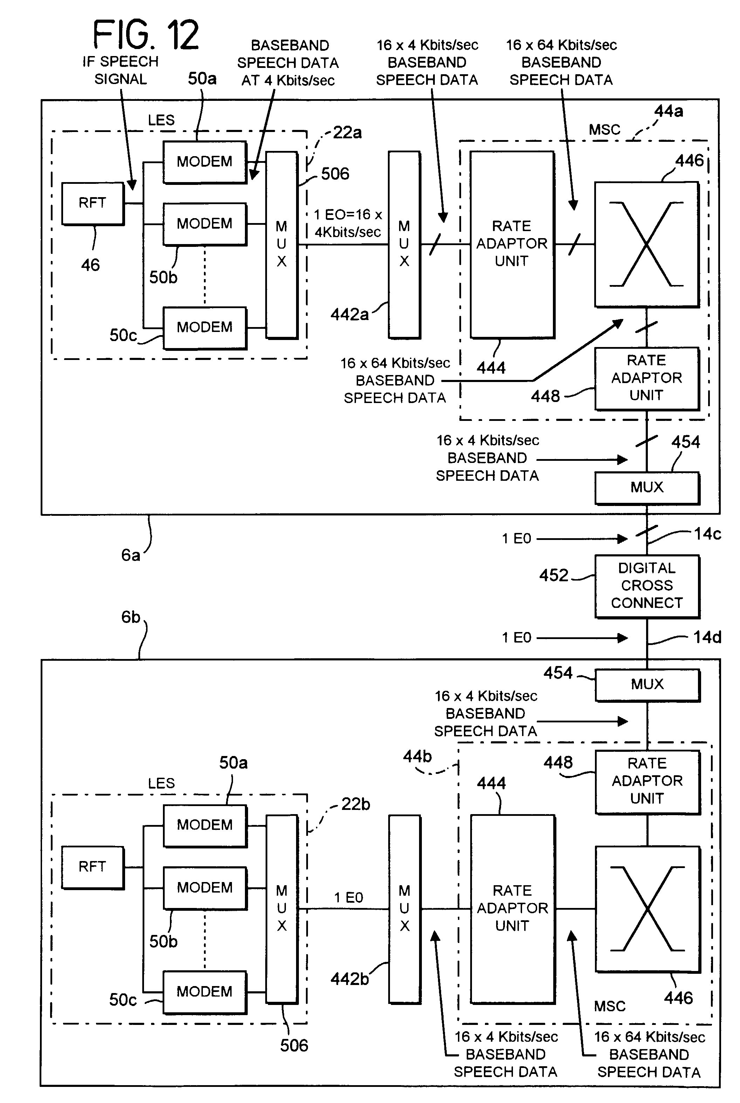

Referring to Figure 12, in which like components to Figure 11 are given the same reference numerals, in this embodiment, communication between a pair of earth station nodes 6a, 6b is via lines 14c, 14d and digital cross connect stage 452 (which could be another earth station node 6).

Some output ports of the switches 446 of each earth station node 6a, 6b are not connected to transcoder units; instead, the 4 kilobit per second output of the rate adapter units 448 are coupled, in banks of 16, to corresponding inputs of a 16 to 1 time division multiplexer 54 the output of which therefore comprises 64 kilobit per second multiplexed signal containing 16 low bit speech rate signals.

This multiplexed speech signal is received at the corresponding demultiplexer 54 of the second earth station node and demultiplexed into 16 separate kilobit per second speech channels, each of which is then upsampled by a rate adapter unit 448 and switched via the switch 446, either to an output port to which a speech transcoder unit 450 is connected, for delivery via a line 14a to a terrestrial network 10 as shown in Figure 11, or to an output port which is connected, via a rate adapter unit 444, to one of 16 ports of a multiplexer 442b.

The multiplexer 442b receives 16 such 4 kilobit per second low bit-rate speech signals and multiplexes them onto a single 64 kilobit per second composite channel for supply to the earth station 22b at which they are demultiplexed by demultiplexer 506 and each is modulated by a modulator 50a-50c for transmission via the satellite 4.

Thus, in this embodiment, the switches 446 associated with each earth station 6 are connected, via low bit rate/64 kilobit per second transcoders located with the switches, to 64 kilobit per second channels (or channels the capacity of which are multiples of 64 kilobit per second) to the terrestrial networks 10a, 10b). The gateways 8 are, in this embodiment, unmodified switching centres (e.g. ISC's) of known type.

Traffic within the network between earth station nodes 6 is carried at low bit rates, which therefore enables several speech channels to be multiplexed onto one conventional ISDN 64 kilobit per second speech channel. To enable the use of conventional and widely available switching hardware the channels are demultiplexed and rate converted to 64 kilobits per second prior to switching, and reconverted and remultiplexed after switching.

Each low bit rate speech channel advantageously includes an associated control (data) channel. This is accommodated where, as described above, the speech channel exceeds a convenient sub multiple of 64 kilobits per second, by removing the error protecting coding, which is less necessary over high quality digital terrestrial links than over a fading RF channel.

### SECOND EMBODIMENT

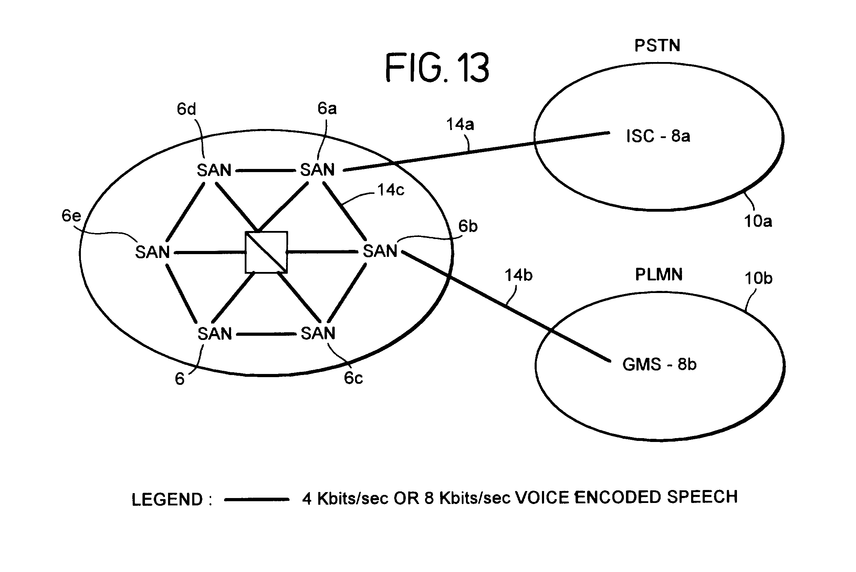

Referring to Figure 13, in the second embodiment, the lines 14a, 14b between each gateway 8a, 8b and the earth station nodes 6a, 6b to which it is connected also carry speech in low bit rate form, in contra-distinction to the first embodiment.

The components of the earth station nodes 6 in this embodiment are the same as those described in relation to the previous embodiment, except that the outputs of the switch 446 are not connected to the lines 14a to gateways 8 via transcoders. Thus, all output ports of the switch 446 may be connected via rate adapter units 448 and 1621 multiplexers 454 to output lines, regardless of whether the lines are connected to other earth stations 6 or to gateway stations 8. All traffic within the ground portion of the satellite network is therefore carried at low bit rates.

In this embodiment, the structure of each gateway station 8 is therefore modified to include a transcoder unit 806. The 64 kilobit per second channels received from the earth station 6 therefore each comprise 16 time division multiplexed low bit rate 4 kilobit per second speech signals, which are demultiplexed by a demultiplexer 802 into 16 separate 4 kilobit per second signals, each of which is rate adapted to 16 kilobits per second by an upconverter 804 (e.g. by oversampling), and fed to a transcoder unit 806 which converts the oversampled low bit rate speech data into 16 kilobit per second A-law PCM coded speech channels suitable to be coupled to the input of an ISDN switch 808 and switched to a line of a PSTN 10a or PLMN 10b.

It will once more be understood that each channel is bidirectional; although the foregoing explanation describes the conversion process from the earth station node 6 to the terrestrial networks 10a or 10b, it will be clear that the transcoder unit 806, rate adapter unit 804 and multiplexer 802 are each two sided and therefore are also arranged, respectively, to convert A-law PCM to low bit-rate speech; down sample from 16 kilobits per second; and multiplex 16 channels into one.

Although the rate adapter unit 804 is shown as separate from the transcoder unit 806, it will be realised that the transcoder unit 806 could include internal rate conversion.

In this embodiment and the preceding embodiment, the transcoder units are arranged to separate out the control channel together with any filling, stuffing or error coding bits, prior to conversion to A-law speech. The information in the control channel is then utilised as necessary; for example, on the up link from the mobile billing information carried thereon could be transmitted to a billing centre and location information carried thereon could be transmitted to the database station 15; and on the down link to the mobile handover data could be carried.

Although in the above described embodiments, the bit rate of the error protected 4.8 kilobit per second speech signal is reduced to 4 kilobits per second, it would be possible instead to increase the rate of the 4.8 kilobit per second signal to 8 kilobits per second by inserting filling or stuffing bits. Since 8 is a submultiple of 64 it is then possible to multiplex 8 such channels onto a signal 64 kilobit per second IDSN channel.

However, this is less efficient by a factor of two and thus is generally less preferred where bandwidth is the major constraint.

On the other hand, since it is unnecessary to decode the 4.8 kilobit per second signal to remove the error protection, the delay introduced can be made shorter than in the above described embodiments.

Where the above described first embodiment is used, since the signal is carried over a conventional 64 kilobit per second ISDN channel, and there is therefore little to choose on technical grounds between routing a call from a terrestrial user to a satellite user 2 via the nearest gateway station 8 and thence over a dedicated line, or via the international PSTN to a gateway station 8 (e.g. the nearest gateway station 8 from an international switch centre (ISC)).

Accordingly, on economic grounds, it may be preferred to arrange that calls for a satellite user which reach an international switch centre (ISC) are routed to the nearest gateway 8 via the international PSTN when the first embodiment is used. Full details of such routing are given in UK application GB 2295296 (incorporated herein by reference) or corresponding international application WO 96/16488.

### THIRD EMBODIMENT

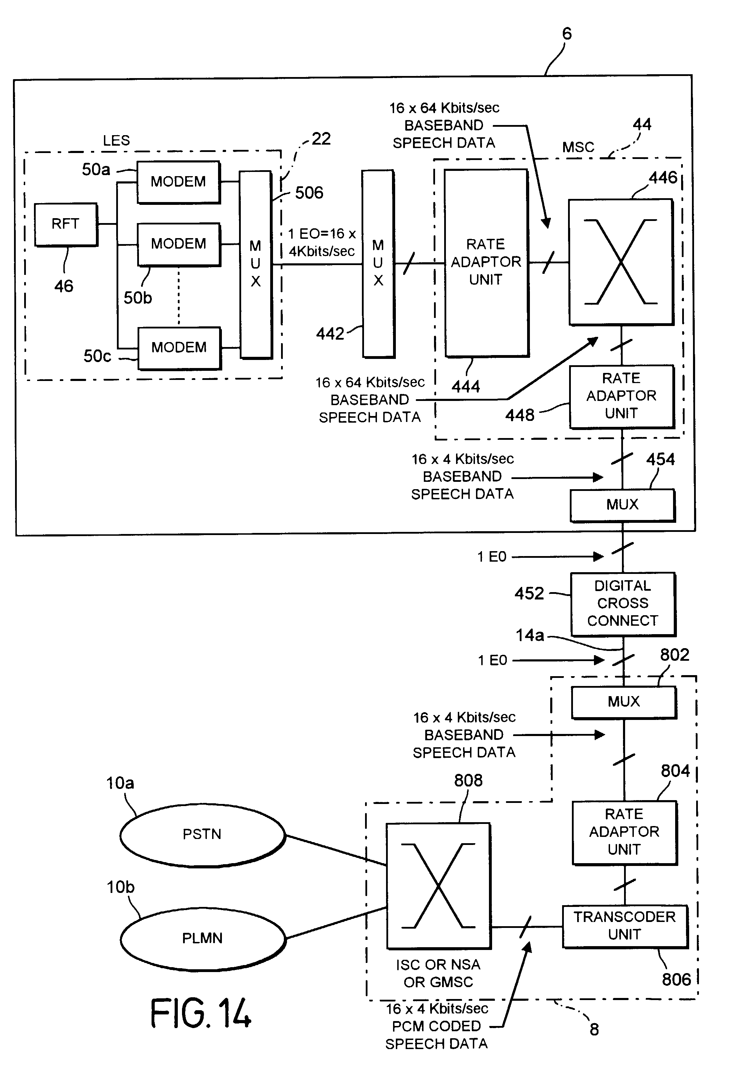

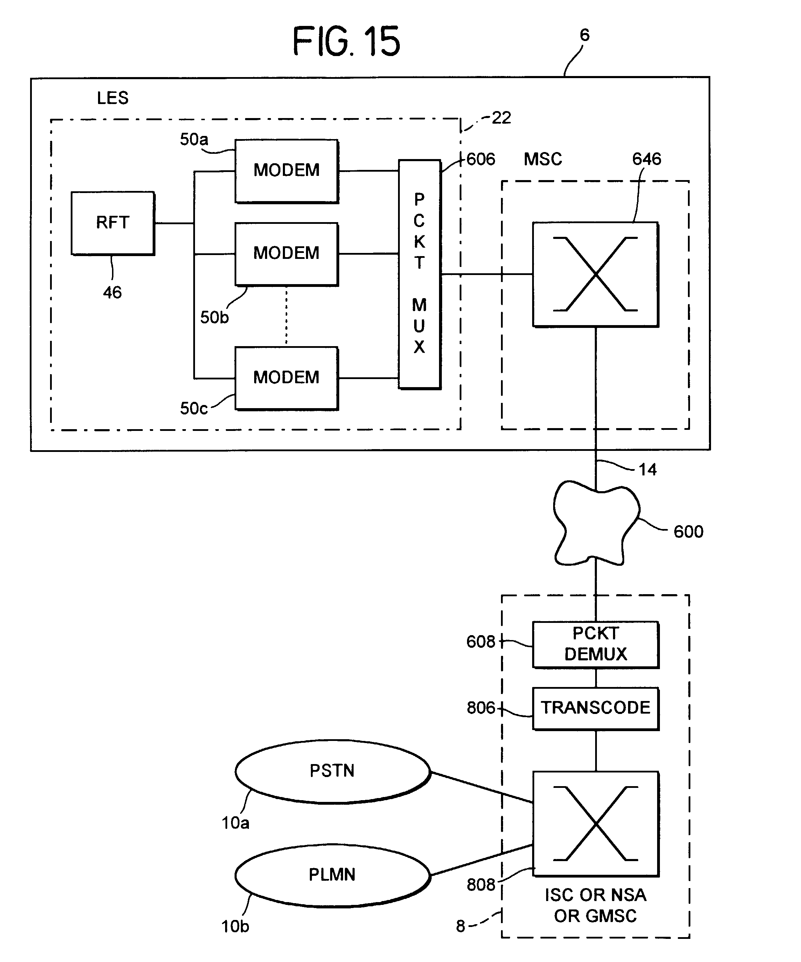

Figure 15 illustrates a third embodiment of the invention. In Figure 15, those components which are the same as those of Figure 14 carry the same reference numerals and will not be discussed further.

In this embodiment, traffic is carried within the ground network in packet form; for example, in the form of ATM cells. Accordingly, the outputs of the modems 50a.... 50c are coupled to a packet multiplexer 606 which is arranged to packetise the low bit rate speech signal into discrete packets, for transmission over the network. Each packet includes header information for routing, as is normal in ATM systems.

In place of the switch 446 of the previous embodiments, an ATM switching node 646 is provided which routes each passage according to its header information (and may, in known fashion, edit the header information to change the routing as necessary).

The packets pass, in connectionless fashion, along the ground lines 14 constituting a packet data transmission network 600, to the gateway station 8 at which a packet demultiplexing circuit 608 separates the packets from each 4 kilobit per second low bit rate voice signal and reassembles them, stripping off their headers. The resulting separated low bit rate speech signals are the passed to the transcoder 806 and the transcoded 64 kilobit per second signals are forwarded for switching via the switch 808 as in the above described embodiment.

From the foregoing description, the operation of routing a call from a fixed to a mobile user will be understood, as will the progress of a call between two mobile users.

In this embodiment, it will be understood that the ATM channels carry data at high speeds and although, because of the packetised nature of the channel, there is no uniform transmission bit rate, the average transmission bit rate is high. In this document, the term 'bit rate' will be understood to include an average bit rate.

This embodiment has the advantage that rate adaptation is performed within the packetising and depacketising processes, and hence conventional packet switching hardware may be used. On the other hand, depending upon the data rate, packetised transmission can sometimes introduce delays which, in such cases, may make this embodiment less preferred.

### OTHER EMBODIMENTS

It will be clear from the foregoing that the above described embodiment is merely one way of putting the invention into effect. Many other alternatives will be apparent to the skilled person and are within the scope of the present invention.

For example, the numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA) .

Although, for the sake of convenience, the term "mobile" has been used in the foregoing description to denote the terminals 2, it should be understood that this term is not restricted to handheld or hand-portable terminals, but includes, for example, terminals to be mounted on marine vessels or aircraft, or in terrestrial vehicles. Equally, it is possible to practice the invention with some of the terminals 2 being completely immobile.

Instead of providing a single central database station 15 storing details of all terminal equipment 2, similar details could be stored at the home gateway 8 for all terminal equipment to register with that home gateway 8.

In the foregoing, the gateways 8 may in fact be comprised within an ISC or exchange or mobile switching centre (MSC) by providing additional operating control programmes performing the function of the gateway.

In the foregoing, dedicated ground networks lines have been described, and are preferred. However, use of PSTN or PLMN links is not excluded where, for example, leased lines are unavailable or where temporary additional capacity is required to cope with traffic conditions.

It will naturally be clear that the stores within the gateways 8 need not be physically co-located with other components thereof, provided they are connected via a signalling link.

Whilst, in the foregoing, the term "global" is used, and it is preferred that the satellite system should cover all or a substantial part of the globe, the invention extends also to similar systems with more restricted coverage (for example of one or more continents).

It will be understood that the geographical locations of the various components of the invention are not important, and that different parts of the system of the above embodiments may be provided in different national jurisdictions. For the avoidance of doubt, the present invention extends to any part or component of telecommunications apparatus or systems which contributes to the inventive concept.

The foregoing, and all other variants, embodiments, modifications or improvements to the invention are intended to be comprised within the present invention.

## Claims

1. A ground network for use in a satellite voice communications system, said system comprising at least one orbiting satellite (4), at least one earth station (6) in communication therewith, and a plurality of user voice terminals (2) in communication with the earth station (6) via a transmission path including the at least one satellite (4), each said user voice terminal including a voice codec (30) generating a digital speech signal carried over said transmission path at a first bit rate, said network comprising a plurality of nodes (6) connected with said earth station (6) and mutually interconnected by terrestrial speech channels each of which is arranged to carry a speech signal at a second bit rate, said second bit rate substantially exceeding said first, in which said network comprises a plurality of multiplexers (506) each of which is connected to receive from said earth station (6) a plurality of said digital speech signals and to multiplex them onto a lesser number of said speech channels.

2. A network according to claim 1, in which said second bit rate comprises a multiple of 64 kilobits per second.

3. A network according to claim 1 or claim 2, in which said multiplexers (506) multiplex a plurality of said digital speech signals onto a single said speech channel.

4. A network according to claim 3, in which each said user terminal (2) includes a channel codec (30) applying redundant encoding to said digital speech signal.

5. A network according to claim 4, further comprising a channel codec (502) connected to receive a said digital speech signal and to remove at least a part of said redundant encoding to translate said digital speech signal to a reduced bit rate.

6. A network according to claim 5, in which said first bit rate exceeds a predetermined bit rate which is in a simple integer ratio to said second bit rate, and said reduced bit rate does not exceed said predetermined bit rate.

7. A network according to any preceding claim, comprising a channel combiner (504) connected to receive said digital speech signal at a third bit rate and to multiplex it with a data channel at a fourth bit rate lower than said third bit rate to generate a multiplexed signal having a bit rate which does not exceed a predetermined bit rate which is in a simple integer ratio to said second bit rate.

8. A network according to claim 7, in which said data channel is associated uniquely with the user terminal (2) from which the digital speech signal with which said data channel is multiplexed originates.

9. A network according to any preceding claim, in which said nodes comprise switching devices (446) operating at a switching bit rate comprising said second bit rate or multiples thereof, and further comprising a demultiplexer (442) connected to each speech channel upstream of a said switching device (446) to demultiplex from said speech channel said plurality of digital speech signals to permit separate switching thereof; a multiplexer (454) connected to each speech channel downstream of said switching device (446) to combine a plurality of separately switched said digital speech signals; and, between each port of said switching device (446) and the multiplexer or demultiplexer (442, 454) to which it is connected, a rate convertor (444, 448) arranged to convert the bit rate of said speech signal from or to, respectively, said switching bit rate.

10. A network according to any preceding claim, in which the digital speech signals are carried in the format generated by said codec (30), without decoding and recoding thereof.

11. A network according to any preceding claim, in which said digital speech signal is carried at a predetermined bit rate which is in a simple integer ratio to said second bit rate, and further comprising at least one gateway node (8) at which said network is connected to at least one further network (10) in which speech signals are carried in a further signal format, and a transcoder (450) arranged to covert between said further signal format and said predetermined bit rate.

12. A network according to claim 11, in which said transcoder (806) is located proximate to said gateway node (8) and said speech signal is carried from said gateway node (8) at said predetermined bit rate.

13. A network according to claim 11, in which said transcoder (450) is located distant from said gateway node (8) and said speech signal is carried from said gateway node (8) in said further signal format.

14. A network according to any preceding claim, in which said channels are carried over leased lines.

15. A network according to any of claims 1 to 14, in which said channels are carried over virtual circuits provided over shared lines (14).

16. A network according to any preceding claim comprising trunk connections between said earth stations (6), and spur links from the earth stations (6) to the gateway stations (8).

17. A method of operating a satellite system ground network comprising multiplexing a plurality of low bit rate speech signals onto an ISDN speech channel and carrying them over ISDN lines.

18. The method of claim 17, further comprising separating said low bit rate speech signals; rate up-converting said separated signal to ISDN speech rates; switching said rate up-converted signals; rate downconverting said switched signals; and recombining said down-converted signals.

19. The method of claim 17 or claim 18, in which said speech signals are compression-encoded for transmission over a satellite link, and are carried in compression encoded format over said ISDN lines.

20. The method of any of claims 17 to 19, in which said speech signals are channel encoded for transmission over a satellite link, and further comprising removing said channel encoding prior to carrying said speech signals over said ISDN lines.

21. The method of any of claims 17 to 20, in which each said speech signal is multiplexed together with a data channel and is carried over said ISDN lines in said multiplex.

22. A ground network according to claim 1 in which said speech channels are for carrying packet data, and said multiplexers comprise packet multiplexers (606).

23. A method of operating a satellite systems ground network comprising converting a plurality of low bit rate speech signals into a packetised form within said ground network and routing them as packets through said network.
